(19) Europäisches Patentamt
European Patent Office
Office européen des brevets

(11) Publication number: 0 575 716 A1

# (12) EUROPEAN PATENT APPLICATION

(21) Application number: 93105888.7

(51) Int. Cl.[5]: G06F 15/80

(22) Date of filing: 08.04.93

(43) Date of publication of application:
29.12.93 Bulletin 93/52

(84) Designated Contracting States:
AT BE CH DE DK ES FR GB GR IE IT LI LU MC NL PT SE

(71) Applicant: Cichocki, Andrzej
Fasanerieweg 15
D-66121 Saarbrücken(DE)
Applicant: Mazurek, Janusz
Fasanerieweg 15
D-66121 Saarbrücken(DE)
Applicant: Weller, Roland
Fasanerieweg 15
D-66121 Saarbrücken(DE)
Applicant: Schuckert, Fred
Fasanerieweg 15
D-66121 Saarbrücken(DE)

(72) Inventor: Masurek, Janusz
Pienzenauerstrasse 56
W-8000 München 80(DE)
Inventor: Cichocki, Andrzej
Bogenweg 2
W-8520 Erlangen(DE)

(74) Representative: Lewald, Dietrich, Dipl.-Ing.
Patentanwalt
Pienzenauerstrasse 2
D-81679 München (DE)

## (54) A neural network and signal processing units.

(57) A special purpose programmable neural network processor, for wide spectrum of optimization and matrix algebra computing problems, which parallel processes of analog or digital input data. The neural network processor comprises: preprocessing circuits, at least one processing unit (artificial neuron) with adaptive synaptic weights for outputing signals in response to preprocessed input signals, and switching circuits interfaced with the adaptive synaptic processors for routing signals between the synaptic weights and the processing unit and/or preprocessing circuits. The neural network processor of the invention can be programmed by switching circuits and by preselecting the suitable shape of a activation function to perform different configurations and to realize various learning algorithm.

EP 0 575 716 A1

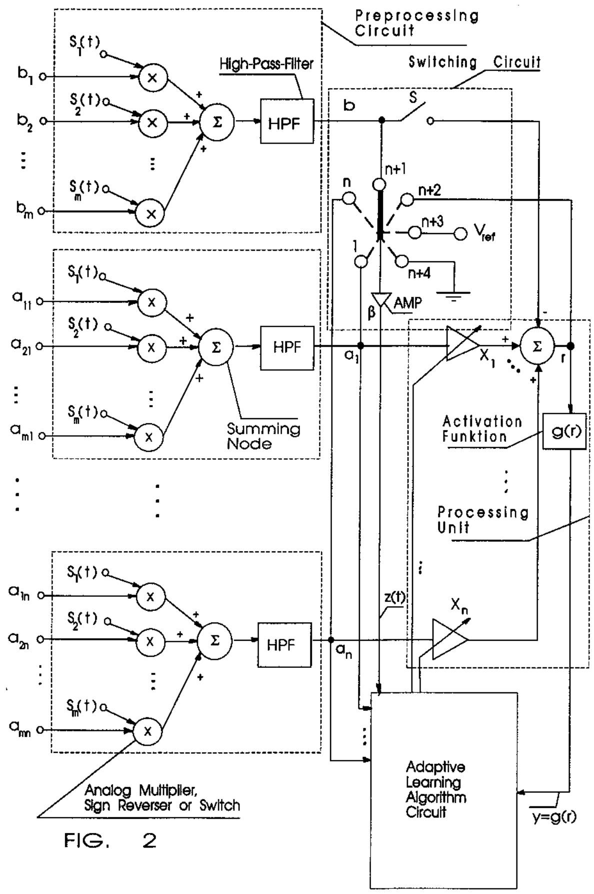
Preprocessing Circuit
High-Pass-Filter
Switching Circuit
HPF
b
S
n+1
n
n+2
n+3
Vref
1
n+4
AMP
β
a1
X1
r
Summing Node
Activation Funktion
g(r)
Processing Unit
z(t)
Xn
an
Adaptive Learning Algorithm Circuit
y=g(r)
Analog Multiplier, Sign Reverser or Switch

FIG. 2

## FIELD OF THE INVENTION

This disclosure relates to neurocomputer systems which simulate the nervous system in living creatures and which provide capabilities of solving complex computing and optimization problems in a relatively rapid and economic fashion. More specifically, this invention relates to the implementation of on artificial neural network which is particularly useful in signal processing, image and signal reconstruction, future extraction, and solving matrix algebra computing problems.

## BACKGROUND OF THE INVENTION

This invention relates to electronic or electro-optic network processor , and more particularly to highly parallel, adaptive and programmable computation network processor that are also referred as artificial neural networks processor or neurocomputer systems.

A multi-purpose digital computer is continually utilized to perform complex opitomization and computation tasks. A major drawback which exists with the use of the standard digital, sequential computer in complex computation tasks is the inherent liitation of these computers to perform their function only in a strictly sequential fashion. It is known that sequential digital computers perform one step of a process or algorithm during each machine cycle. Depending upon the complexity of the algorithm, the digital computer must perform a enormous number of machine cycles to form the complete solution of a complex algorithm. Thus the use of digital computers for may complex computation and optimatization tasks does not allow to obtain solution in "real time" or their use is too expensive.

In order to overcome this problem, there must be a computer capable of performing a very large number of simple computations simultaneously. Such computer is an artificial neural network. A neural network is a network interconnected elements or processing units each capable of carrying out a simple operation. Owing to the large number of processing elements and connection between them the neural network as a whole is capable of performing very complex computation. The structure of the network is characterized by high parallelism, therefore, the total computation time is comparable to the response time of the single elements which can be very small. Electronic neural networks have been described by

[1] J.Hopfield " Neurons With Graded Response Have Collective Computational Properties Like Those of Two-state Neurons", Proc. Natl. Sci., USA, Vol. 81, pp.3088-3092, May 1984.

[2] D.W.Tank and J.Hopfield, " Simple 'Neural' Optimization Networks : an AD Converter, Signal Decision Circuit, and a Linear Programming Circuit", IEEE Trans. Circuits and System, vol CAS-33 No 5 pp. 533-541 May 1986; and U.S. Pat No. 4,849,925 issued Jul. 18, 1989 by M.C.Peckerar and C.R.K Marrian.

Exemplary functional block-diagram of Hopfield-type neural network is shown in FIG.**1**.

The network of FIG.**1** consists of two layers of processing units (artificial neurons). Each processing unit produces its output by computing the inner product of its input signals and its appropriate synaptic weights and possibly passing the result through the nonlinear activation function $g(r_i)$ or it is integrating by an integrator with nonlinear feedback.

The first layer is called sometimes the "sensors layer", since it senses the actual variables $x_j(t)$ and computes the actual errors $e_i = g(r_i)$,where $r_i$ are residuals computed as

$$r_i = \sum_{j=1}^{n} a_{ij} x_j - b_i \qquad (1)$$

The error signals $e_i$ produced by the "sensors layer" are combined in the second layer of processing units and integrated by integrators. The conventional Hopfield type neural networks of FIG.**1** has several very large scale integration implementations problems.

Firstly, in the conventional neural network a great number of programmable or adjustable synaptic weights $a_{ij}$ is required.

Furthermore, the implementation is difficult and expensive because of the complex connectivity between a large number of processing units. The wiring of the large number of processing units on a two-dimensional surface of a silicon wafer represents a major bottleneck for electronic integrated circuits implementation of neural networks.

Moreover, with conventionally designed neural network as the number of training data increases then number of programmed (adjustable) synaptic weights also greatly increases.

The conventional neural network have several associated problems such as increased power consumption and decreased access time. Moreover, the previous conventional neural network electronic and optic implementations was designed for specific (particular) learning algorithm and/or specific applications.

## SUMMARY OF THE INVENTION

The principal object of the invention is to provide alternate means and configurations by which the afore described problems can be circumvented.

It is object of the invention to provide a neural network processor (architecture an method) structure that allows to realize different neural systems performing various on the chip implemented learning adaptive algorithms.

It is another object of this invention to provide an arrangement, that can easily be implemented in integrated electronic circuit or electro optic technology. Still another object of the invention is to provide a new parallel signal processor which may form the basis for new instrumentation having applications to may intelligent monitoring systems as well as to systems with medical applications including computer tomography.

Accordingly, it is a object of the invention to extend, modify and also simplify the conventional Hopfield-type neural network so that it can solve large spectrum of complex optimization and matrix algebra computing problems in real-time.

The present invention resides on a artificial neural network processor having one or more preprocessing circuits, at least one processing unit (artificial neuron) with adaptive synaptic weights with on chip synaptic processors realizing specific learning algorithms and switching circuit interfaced with synaptic processors for routing signals between the synaptic weights and the output of processing unit and outputs of the preprocessing circuits to perform different configurations and to realize various learning algorithms.

A various change could be made in the above constructions without departing from the scope of the invention, it should be understood that all matter contained in the below presented detailed description or shown in the accompanying drawings shall be interpreted as illustrative and not in a limiting sense.

Numerous additional modifications and variations of the present invention are possible in view of the descriptions. Thus invention may be applied otherwise than specifically described herein. For example, by changing the nature or art of modulation and/or mixing of input training data stored in memory in order to obtain set of preprocessed training (learning) signals.

The invention and may of its attendant advanges are more fully understood from the following detailed description of preferred embodiment, it being understood, however, that changes and modifications can be made that do not affect the spirit of the invention, nor exceeds its scope, as expressed in the appended claims. Accordingly, the preferred embodiment are now described with particular reference to drawing figures, wherein:

## BRIEF DESCRIPTION OF THE DRAWINGS

FIG.**1** is a functional block diagram of the conventional Hopfield-type neural network

FIG.**2** is a block diagram of a neural network processor in accordance with the present invention.

FIG.**3** illustrates a simplified block diagram of a neural computer with on chip learning algorithms in accordance with the present invention.

FIG.**4** is a circuit schematic of the neural network with another preferred embodiment of the present invention.

FIG.**5A** and FIG.**5B** show detailed block diagrams of an individual synaptic processor of the neural network of FIG.**4** of the present invention.

## DETAILED DESCRIPTION OF THE PREFERRED EMBODIMENTS

The invention is now described with reference to the drawings figures, wherein like reference numerals and characters indicate identical or corresponding parts throughout the several views and particularly to FIG.**1** which shows a the Hopfield-type conventional neural network referred to above. As discussed above, the neural network is a highly interconnected circuit comprising two layers of artificial neurons with programmable (adjustable) synaptic weights designated by $a_{ij}$ and activation functions designated by $g(r_i)$, and $f(x_j)$, respectively, in the first and second layer. In this network the $b_i$, $a_{ij}$ represent training pattern, where ($i$ = 1, 2, ..., $m$) ; ($j$ = 1, 2, ..., $n$).

As illustrated in FIG.**2** an artificial neural network processor in accordance with the present invention comprises preprocessing circuits, a switching or selecting circuit, an adaptive learning algorithm circuit and at least one processing unit (artificial neurons).

The input training data are designated by $\{a_{11}, a_{21}, ..., a_{m1}\}$, ..., $\{a_{1n}, a_{2n}, ..., a_{mn}\}$ and desired (target) data $\{b_1, b_2, ..., b_m\}$. In fact the data $\{b_i, a_{i1}, a_{i2}, ..., a_{im}\}$; $(i = 1, 2, ..., m)$ ; $(j = 1, 2, ..., n)$ usually builds up (constitutes) training pairs or training patterns.

These training pattern can be stored in appropriate analog or digital memory cells. The processing unit comprises a plurality of adaptive synaptic weights designated by $x_j$ $(j = 1, 2, ..., n)$ , a summing node and an output activation function designated by g(r) where $r$ is an output residual signal of the summing node.

Each of the preprocessing circuits comprises a plurality of analog multipliers, or sign reverses or switches, an summing node and an optional high pass filter designated by HPF. The input training and desired data or signals are modulated or multiplied in analog multipliers, or sign reversers or switches by analog or binary pseudo-random or deterministic high frequency source signals designated by $S_1(t)$, $S_2(t)$, ..., $S_m(t)$ where $t$ is time and then the modulated signals are summed or combined in the corresponding summing nodes. In order to generate (obtain) zero-mean (centred) time-variable preprocessed signals the output signal of summing nodes of preprocessing circuits are filtered optionally by high pass filters (HPF). The output signals of preprocessing circuits are designated by $b(t)$, $a_1(t)$, $a_2(t)$, ..., $a_n(t)$ and are referred further as preprocessed (time-variable) training signals. In other words, the output signals of the preprocessing circuits serve as the input training and desired signals of the processing unit, while $b(t)$ is preprocessed desired (target) signal. In other words, the output signals of the preprocessing circuits serve as the input training and desired signals of the processing unit.

The preprocessed training signals are multiplied by corresponding synaptic weights $x_j$ and then summed in a summing node of the processor unit to give output signal according to formul

$$r(t) = \sum_{j=1}^{n} a_j(t)x_j - b(t)S_B \qquad (2)$$

which $S_B$ is equal 0 or 1.

The above output signal is further applied to the output activation function $g(r)$ to produce output signal designated by $y$ which is applied to adaptive learning algorithm circuit. The output activation function $g(r)$ can take various different known shapes, for example, the function can be linear ($y = \mp r$), sigmoid ($y = \tanh(r)$), signum or hard limiter ($y = \mathrm{sgn}(r)$).

The modulated source signals $S_1(t)$, $S_2(t)$, ..., $S_m(t)$ can be analog or digital (binary) signals and is preferred that these signals are high frequency, mutually uncorrelated, identically distributed, pseudo-random or noise sources. The signals $S_i(t)$ can be generated by any multiple known pseudo-random or noise digital (binary) or analog generator producing uncorrelated signals.

The variable (adjustable) gain of each adaptive synaptic weight $x_j$ ; $(j = 1, 2, ..., n)$ is individually controlled by an adaptive learning algorithm circuit or circuits.

The switching or selecting circuit enables to realize different learning algorithms either supervising or unsupervised depending on the position of switches $S_A$ and $S_B$. If switch $S_B$ is closed (that is $S_B = 1$) the network realizes a supervising learning algorithm, on the other hand, if the switch $S_B$ is opened (that is $S_B = 0$ ) the network performs unsupervised learning algorithm. The multiposition switch $S_A$ can take one of $(n + 4)$ possible positions. The switch $S_A$ (or equivaulty a plurality of switches) selects one of input signals and apply it to amplifier AMP with amplification or damping factor designated by $\beta$. The amplifier AMP furnishes an input learning signal designated by $z$ and applies it to adaptive learning algorithm circuit. In other words, the input learning signal $z$ is thus obtained as the product of the predetermined factor $\beta$ of the amplifier/attenuator AMP and preselected signal as one of the signals: $\{a_1(t), a_2(t), ..., a_n(t), b(t), r, V_{ref}, 0\}$ where $V_{ref}$ is reference signal, substantially equal +1 or -1.

The adaptive learning algorithm circuit or circuits responsive to input learning signals $z$, $u$, $a_j(t)$ ; $(j = 1, 2, ..., n)$ produces or generates the required values of synaptic weights $x_j$.

An adaptive learning algorithm for present invention can be implemented in various ways. FIG.**3** shows a functional block diagram of a neural network with exemplary on chip implementation of learning algorithm. According to this implementation each synaptic weight is individually controlled by synaptic processor comprising analog integrator, and analog multipliers or sign reversers, summing nodes and a local feedback loop including scaling factor $\alpha$ and activation function $f(x_j)$.

The invented learning generalized and flexible algorithm implemented in the network of FIG.**3** is governed by the following differential equations

$$\frac{dx_j}{dt} = \frac{1}{\tau_j}[-\alpha f_j(x) - y(a_j + x_j z)] \qquad (3)$$

in which $\tau_j$ is integration time constant of the integrator, $\alpha \geqq 0$ is predetermined scaling factor, $f(x_j)$ is local activation function which can take different forms, for example:
linear ($f(x_j) = x_j$) , signum ($f(x_j) = \text{sgn}(x_j)$) ; $a_j(t)$ is an preprocesse trained signal equal:

$$a_j(t) = \sum_{j=1}^{n} a_{ij} S_i(t) \qquad (4)$$

where $S_i(t)$ are zero-mean mutually uncorrelated, identically distributed pseudo-random signals, $y = g(r)$ is output signal of the processed unit, $g(r)$ is activation function, and $z$ is an output learning signal of switching circuit. Depending on specific applications the learning algorithm described by equation (**3**) can take following important special forms including:

(a) for $z = 0$, $\beta = 0$, $\alpha = 0$, $y = r$, $S_B = 1$ one obtain **LMS** (least mean squares) algorithm,

$$\frac{dx_j}{dt} = -\frac{1}{\tau_j} r a_j \qquad (5)$$

(b) for $z = b$, $\beta = 1$, $\alpha = 0$, $y = r$, $S_B = 1$ one obtain **TLS** (total least squares) algorithm,

$$\frac{dx_j}{dt} = -\frac{1}{\tau_j} r (a_j + x_j b) \qquad (6)$$

(c) for $z = r$, $\beta = -1$, $\alpha = 0$, $y = -r$, $S_B = 0$ one obtain normalized **Hebbian** (called also **Oja's**) learning algorithm,

$$\frac{dx_j}{dt} = \frac{1}{\tau_j} r (a_j - x_j r) \qquad (7)$$

(d) for $z = a_k$, $\beta = 1$, $\alpha = 0$, $y = r$, $S_B = 0$, $k = j$ we obtain a new learning algorithm for extraction minor component vector or computing eigenvector of given matrix $\boldsymbol{A} = [a_{ij}]$ corresponding to smallest singular value

$$\frac{dx_j}{dt} = -\frac{1}{\tau_j} r (a_j + x_j a_k) \qquad (8)$$

with $x_k(0) = x_k(t) = -1$ and $x_k(0) = 0$ for $j \neq k$

(e) for $z = 0$, $\beta = 0$, $\alpha > 0$, $y = r$, $S_B = 1$ $f_j(x_j) = \text{sgn}(x_j)|x_j|^{p-1}$ ; $1 \leqq p \leqq \infty$ one obtain new learning algorithm for solving minimum $\boldsymbol{L_p}$ **- norm** optimization problem subject to linear constraints $\boldsymbol{Ax} = \boldsymbol{b}$ in the form

$$\frac{dx_j}{dt} = -\frac{1}{\tau_j}[\alpha f_j(x_j) + r a_j] \qquad (9)$$

(g) for $z = 0$, $\beta = 0$, $\alpha > 0$, $y = r$, $S_B = 1$; $f(x_j) = [1 + ln(x_j)]$,

$$x_j > 0$$
(5)

one obtain algorithm for maximum entropy optimization problem in the form

$$\frac{dx_j}{dt} = -\frac{1}{\tau_j}[\alpha [1 + ln(x_j)] + r a_j] \qquad (10)$$

(h) for $z = 0$, $\beta = 0$, $\alpha > 0$, $S_B = 1$

$$f_j(x) = c_j + \sum_{i=1}^{m} g_{ji} x_i$$

; one obtain learning algorithm for solving quadratic optimization problem formulated as:
minimize

$$F(x) = \sum_{j=1}^{n} c_j x_j + \frac{1}{2}\sum_{i=1}^{m}\sum_{j=1}^{n} g_{ij} x_i x_j \qquad (11)$$

subject to linear constraints

$$\sum_{j=1}^{n} a_{ij} x_j - b_i = 0 \qquad (i = 1, 2, \ldots, m) \;;$$

The learning algorithm take the form(

$$\frac{dx_j}{dt} = -\frac{1}{\tau_j}\left[\alpha\left(c_j + \sum_{i=1}^{m} g_{ij} x_i\right) + r a_j\right] \qquad (12)$$

FIG.**4** shows a circuit schematic of the neural network with another prefferd erred embodiment of the present invention. The architecture shown in FIG.**4** is modular in the sense that the size of the network can be increased by interconnecting more chips together. No special interface or interchip communication hardware is needed for this.

In this circuit schematic rather expansive analog multipliers or sign reversers employed in preprocessed circuit are principally replaced by simple switches.

The each preprocessing circuit comprises: plurality of switches designated by $\{S_1, S_2 \ldots, S_m\}$, plurality of summing nodes and plurality of local mean estimators.

The switches sample (i.e. multiply by 1 and 0) the input training data and desired (target) data. A local mean estimator estimates local mean value of training or desired data. The sampled signals and local mean value signals are algebraically summed (mixed) in summing nodes to produce time-variable, zero-mean preprocessed training signals.

Various control strategies for controlling the switches $\{S_1, S_2, ..., S_m\}$ can be chosen. In the simplest control strategy the switches are controlled by a known multiphase clock generator. In this case the switches are closed and opened cyclically and sequential, i.e. at first are closed $S_1$ next $S_2$ and so on. In this case the training static data stored in a memory are scanned over time to produce time variable preprocessed training signals. If control clock signals are not overlapping the summing nodes are not necessary. Also for current signals the summing nodes are required since currents are inherently summed in internal nodes and can by converted into voltage by appropriate resistors or capacitors.

In another control strategy the switches can be controlled simultaneously by a known pseudo-random generator producing multiple uncorrelated bit streams. The useful feature and advantage of the neural network of the present invention shown in FIG.**4** is that it allows either of processing all input training data fully simultaneously or a processing group of data called blocks. These block need not be fixed during learning (optimization) process, i.e. the number of blocks, their size and assignment of training data may all vary in time. In special case the network allows processing only one training pair (training pattern) in every time slot if switches $\{S_1, S_1, ...., S_n,$ are opened and closed cyclically and synchronously.

The neural network of the presented invention offers several attractive features including ability to process of training data of arbitrary length (for example large images) and very low-cost implementation by reducing number of interconnections and number of adaptive (adjustable) synaptic weights.

The output signals of preprocessing circuits designated by $b$, $a_1$, $a_2$, ..., $a_n$ serve as the input time-variable, zero-mean training signals. These training signals are multiplied by actual values of synaptic weights $x_j$. The desired values of each synaptic weights computed or estimated by associated (corresponding) synaptic processors designated by SP.

Detailed preferred implementation of synaptic processor according to the present invention are shown in FIG.**5A** and FIG.**5B**.

FIG.**5A** shows functional block diagram of an individual synaptic processor operating continuously in time, while FIG.**5B** shows functional block diagram of the digital synaptic processor operating discretely in time.

The circuit of FIG.**5A** comprises analog integrator, analog multipliers, summing nodes and activation functions designated by $f(x_j)$ and $h(e_j)$ . The input learning signals $z$, $y$, $a_j$ are delivered to the synaptic processor which computes the suitable or desired values of synaptic weight $x_j$ according to the following differential equation:

$$\frac{d}{dt}x_j(t) = \frac{1}{\tau_j}\{-\alpha f[x_j(t)] - y(t)h[a_j(t) + z(t)x_j(t)]\} \qquad (13)$$

in which $\tau_j$ is integration time constant of the integrator, $\alpha \geqq 0$ is predetermined scaling factor, $f[x_j(t)]$ is local feedback activation function, $y(t) = g(r)$ is an output signal of the processing units(5) $h[e_j]$ is an error activation function: substantially preselected as linear function ($h[e_j] = e_j$) or signum or sigmoid function $z$-$(t)$ is an output switching or preselected circuit and $a_j(t)$ is a preprocessed training signal.

The circuit of FIG.**5B** comprises, delay element, summing nodes, multipliers and preselected activation functions. The circuit operates principally discrete in time according to the following recurrent (iterative) formula:

$$x_j(k + 1) = x_j(k) - \alpha(k)f[x_j(k)] - \eta(k)y(k)[a_j(k) + z(k)x_j(k)] \qquad (14)$$

in which $\alpha(k) \geqq 0$ is preselected scaling factor, $\eta(k)$ is preselected learning rate, $x_j(k + 1)$ is the next value of the $j$ - $th$ synaptic weight, $x_j(k)$ is the present (actual) value of that synaptic weight, $y(k) = g[r(k)]$ is an actual output signal of the processing unit, $g[r(k)]$ is a preselected output activation function, $x_j(k)$ is an actual value of the preprocessed training signal associated (corresponding) to $j$ - $th$ synaptic weight, $z(k)$ is an actual a preselected leaning signal and $f[x_j(k)]$ is an actual value of preselected local feedback activation function.

## Claims

1. A neural network signal processing apparatus comprising:
a plurality of preprocessing circuits for preprocessing of input training and desired (target) data or signals, each of which includes means for modulating, multiplying or sampling of said training and desired data means for providing sums of the modulating, multiplied or sampled signals, means for extracting of ac zero-mean component of the each summed (mixed) signal,
at least one processing unit comprising a plurality of adaptive synaptic weights, a summing node and an output activation function including means for preselection of suitable activation function,
an adaptive learning algorithm circuit or circuits including means for computing the local values of synaptic weights,
a switching circuit including means for selecting learning signal for said adaptive learning algorithm circuit.

2. The apparatus according to claim **1** wherein said preprocessing circuits are coupled to said synaptic weights by high pass filters for high pass filtering of time-variable preprocessing output signals or extracting their ac components.

3. The neural network according to one of the preceding claims in which at least one said preprocessing circuit includes:
a plurality of switches (controlled by pseudo random or deterministic multiphase generators) for sampling input training or desired data,
a local mean estimator for local estimation of an actual-mean value of the said input training data,
a summing node for summing sampled signals and substruction the said local mean value.

4. The apparatus according to one of the preceding claims wherein said preprocessing circuits include means for scaning over time static training data, stored in a memory, for converting them into time variable, preferably zero-mean value, preprocessed training signals.

5. A neural network architecture (configuration) comprising:
a plurality of preprocessing circuits, each of which comprises a plurality of switches, for providing the plurality of sampled signals of incoming training data, a summing node for summing or combining the sampled signals and providing generation of preprocessed time-variable training signals,
at least one processing unit (artificial neuron) comprising a plurality of adaptive synaptic weights, a summing node and an output activation function for producing (or generating)
required or desired output signals,
a switching circuit for preselecting an input learning signal,
a plurality of synaptic processors responsive to said preprocessed training signals, said output signal of said processing unit and said preselected input learning signal for providing a computation or estimation of desired values of said synaptic weights.

6. The neural network architecture is realizable in the form of an integrated electronic circuit, as an integrated opto-electronic device.

7. The neural network architecture of claim **5** in which said synaptic processor or said processors comprise means for iteratively updating said synaptic weight values according to the formula

$$x_j(k+1) = x_j(k) - \alpha f[x_j(k)] - \eta y(k)\,[a_j(k) + z(k)x_j(k)]$$

for ($j = 1, 2, ..., n; k = 1, 2, ...$) in which $x_j(k+1)$ is the next value of the $j$ - $th$ synaptic weight, $x_j(k)$ is the present value of that synaptic weights, $\alpha > 0$ is the predetermined scaling factor, $\eta > 0$ is the predetermined learning rate, $y(k) = g(r)$ is the actual output signal of the processing units, $a_j(k)$ is an actual value of the preprocessing training signal for $j$ - $th$ synaptic weights, $z(k)$ is the preselected learning signal and $f[x_j(k)]$ is a local feedback activation function).

8. Neural network of claim **5** in which each said synaptic processor comprises means for continuously time updating values of said synaptic weights according to the formula:

$$\frac{d}{dt}x_j(t) = \frac{1}{\tau_j}\{-\alpha f[x_j(t)] - y(t)h[a_j(t) + z(t)x_j(t)]\}$$

in which $\tau > 0$ is an integrating time-constant of an integrator, $\alpha \geqq 0$ is scaling factor, $f(x_j)$ is a local feedback activation function, $y(t) = g(r)$ is actual output and $g(r)$ is output activation function of the processing unit $a_j(t)$ is the preprocessed training signal, and $z(t)$ is a preselected learning signal, $t$ is time and $h(e_j)$ is an error activation function, substantially $h(e_j) = e_j$ or $h(e_j) = \text{sgn}(e_j)$

**9.** Use of the neural network apparatus according to claim **1** the neural network architecture according to claim **5** and the matter according to claim **11** in computer tomographes, medical diagnostic system, image and signal reconstraction apparatus.

**10.** The neural network of claim **6** in which the scaling factor $\alpha$ and/or learning rate $\eta$are selectable, that is their values can be predetermined (preselected) as constants from a range of substantially 0 to substantially 100 or they substantially decrease in time from predetermined value to zero.

**11.** The neural network of claim **7** in which said activation functions $y = g(r)$ and $f(x_j)$ are selectable, that is their shapes can take various form e.g. linear, sigmoid, signum (hard limiter) activation functions.

**12.** A method of calculating the neural network output values and synaptic weight values responsive to available input training data comprising the steps of:
(a) Multiplying (or sampling) of the available training data by time-variable, high frequency analog or binary external source signals, preferably mutually uncorrelated and identically distributed,
(b) Summing (mixing ) the multiplied or sampled signals,
(c) Simultaneously extracting or filtering of ac, zero-mean value, components of the (mixed) summed signals to produce scaled preprocessed training signals,
(d) Multiplying the extracted ac components by actual values of synaptic weights,
(e) Simultaneously, computing the values of synaptic weights using preselected learning algorithm by solving associated differential or difference equations,
(f) Summing algebraically the actual values of the synaptic weights multiplying by the preprocessed training signals.

**13.** The neural network of claim **1** comprising at least one of multiposition selected switch or plurality os switches for selecting as learning signal one of preprocessed training signal, output signal of processing unit or constant value signal.

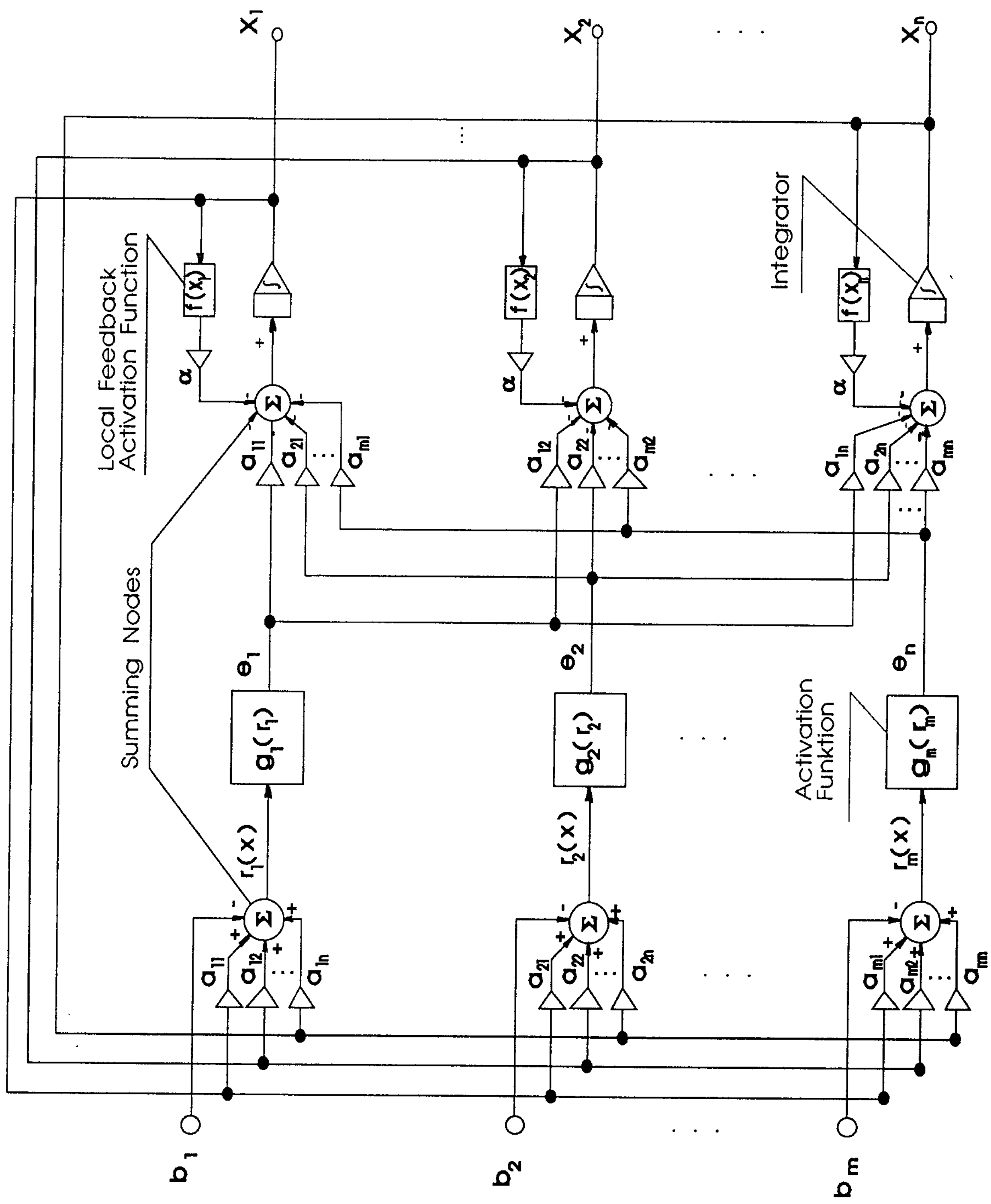
Local Feedback Activation Function
Summing Nodes
Integrator
Activation Funktion
b1
b2
bm
X1
X2
Xn
e1
e2
en

FIG. 1

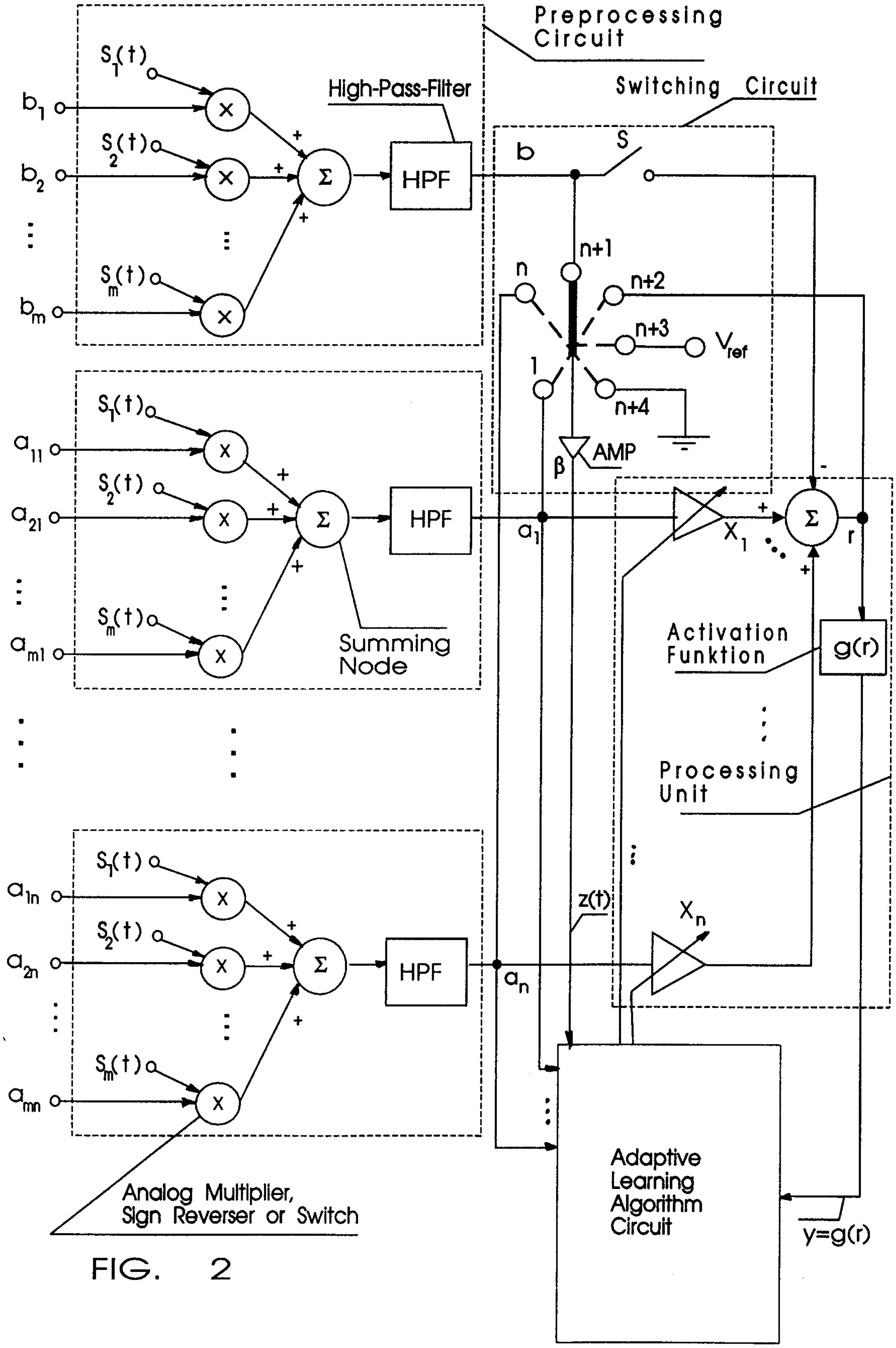
Preprocessing Circuit
High-Pass-Filter
Switching Circuit
$b_1$
$b_2$
$b_m$
$S_1(t)$
$S_2(t)$
$S_m(t)$
HPF
b
S
n+1
n
n+2
n+3
$V_{ref}$
1
n+4
AMP
β
$a_{11}$
$a_{21}$
$a_{m1}$
$a_1$
$X_1$
r
Summing Node
Activation Funktion
g(r)
Processing Unit
$a_{1n}$
$a_{2n}$
$a_{mn}$
z(t)
$X_n$
$a_n$
Adaptive Learning Algorithm Circuit
y=g(r)
Analog Multiplier, Sign Reverser or Switch

FIG. 2

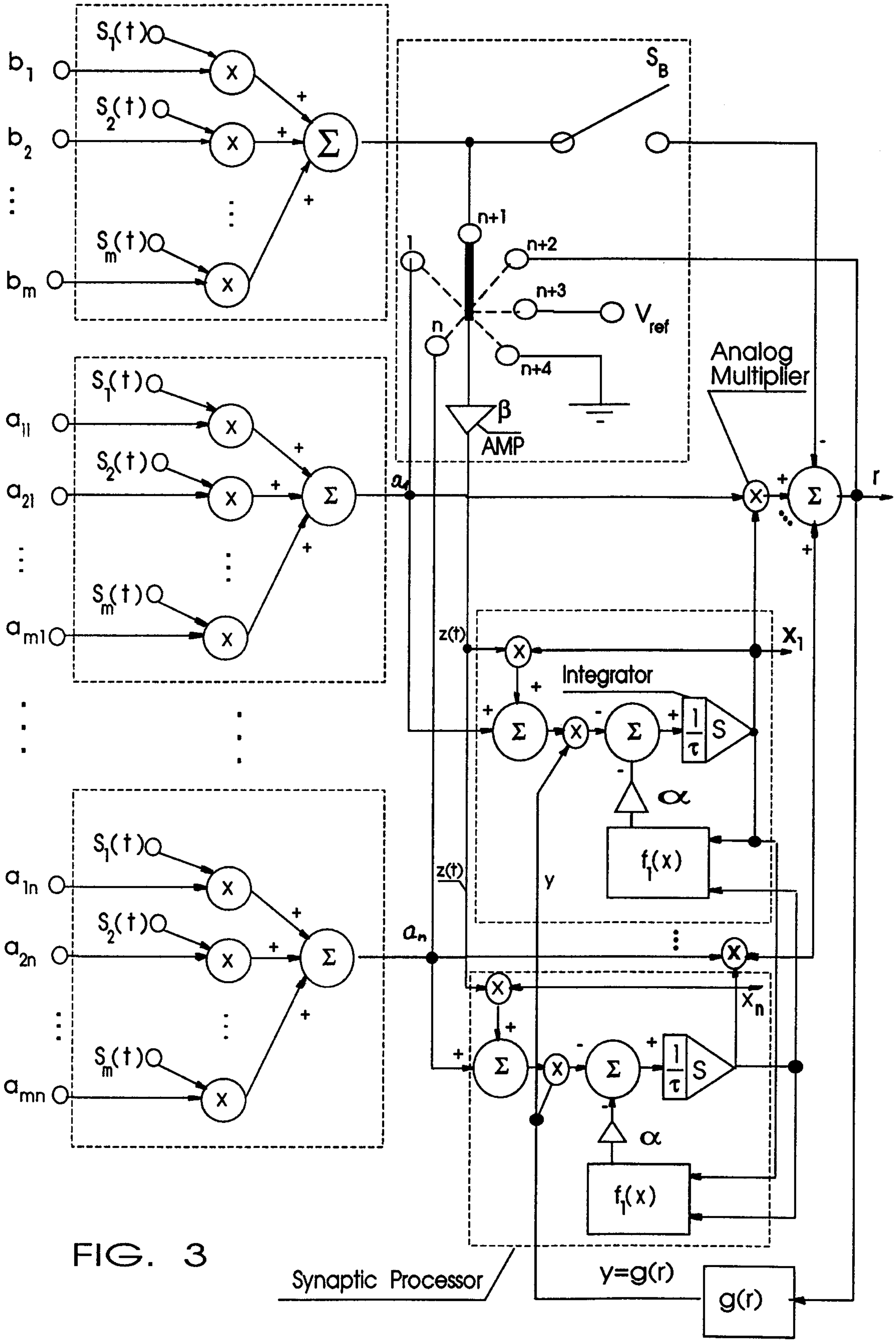
$b_1$
$b_2$
$b_m$
$S_1(t)$
$S_2(t)$
$S_m(t)$
$a_{11}$
$a_{21}$
$a_{m1}$
$a_{1n}$
$a_{2n}$
$a_{mn}$
$S_B$
n+1
n+2
n+3
n+4
1
n
$V_{ref}$
β
AMP
Analog Multiplier
r
$a_1$
$a_n$
z(t)
$X_1$
$X_n$
Integrator
α
$f_1(x)$
y
y=g(r)
g(r)
Synaptic Processor

FIG. 3

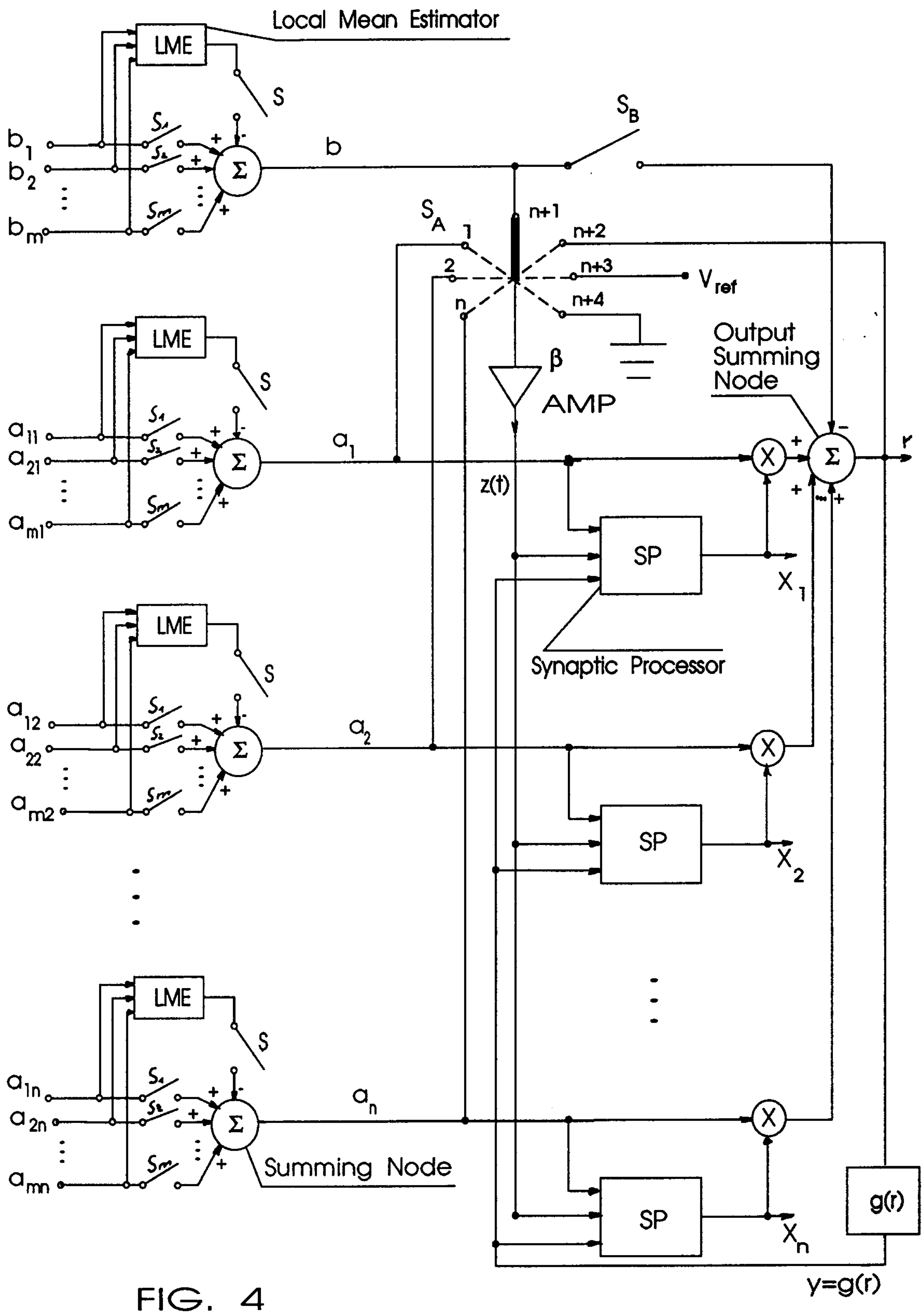
Local Mean Estimator
LME
S
$S_B$
$b_1$
$b_2$
$b_m$
b
$S_A$
1
2
n
n+1
n+2
n+3
n+4
$V_{ref}$
β
AMP
Output Summing Node
$a_{11}$
$a_{21}$
$a_{m1}$
$a_1$
z(t)
r
SP
$X_1$
Synaptic Processor
$a_{12}$
$a_{22}$
$a_{m2}$
$a_2$
$X_2$
$a_{1n}$
$a_{2n}$
$a_{mn}$
$a_n$
Summing Node
g(r)
$X_n$
y=g(r)

FIG. 4

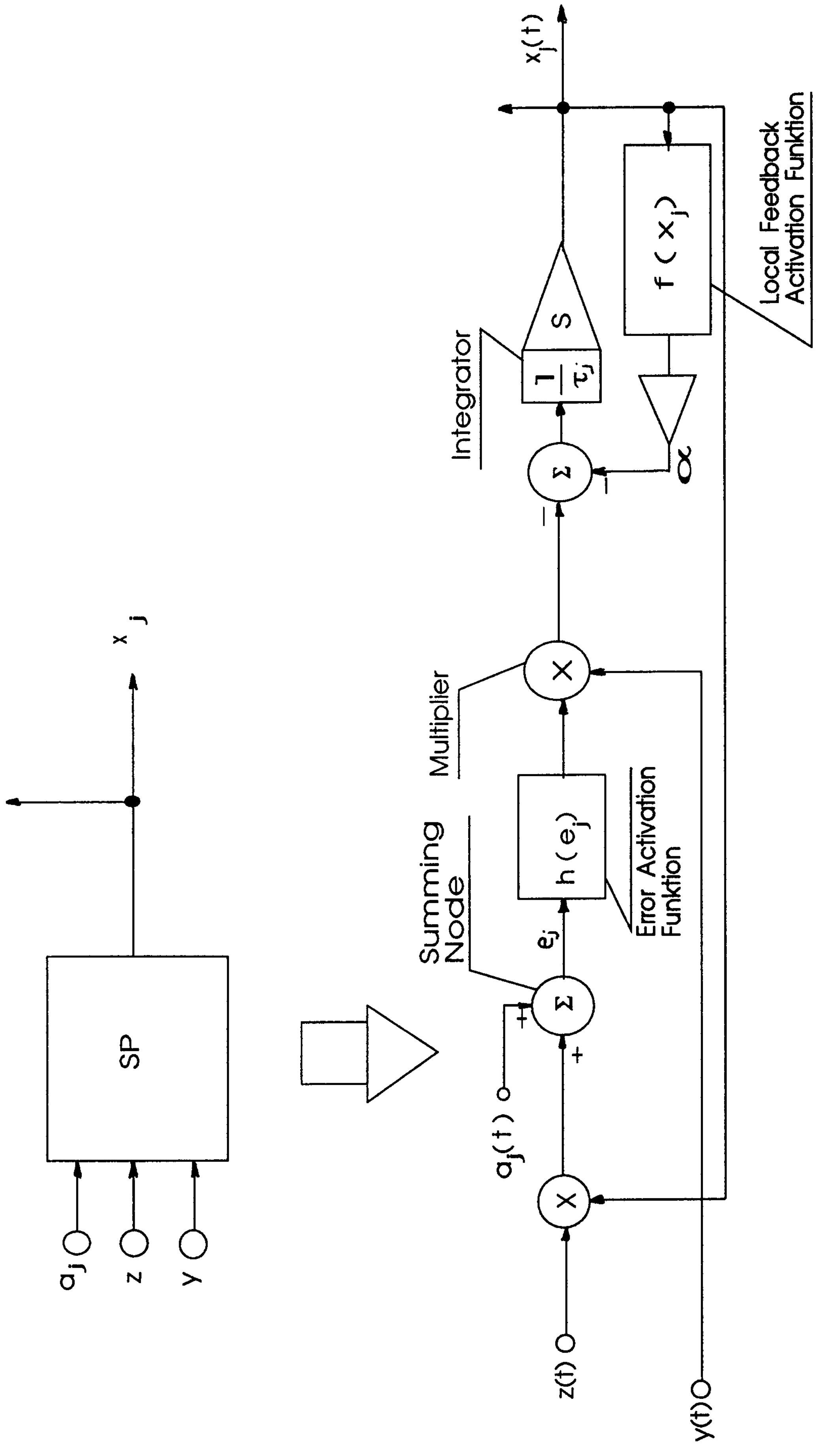
SP
$a_j$
z
y
$x_j$
Integrator
Summing Node
Multiplier
Error Activation Funktion
Local Feedback Activation Funktion
h ( $e_j$ )
f ( $x_j$ )
$e_j$
$x_j(t)$
$a_j(t)$
z(t)
y(t)
$\alpha$


FIG. 5A

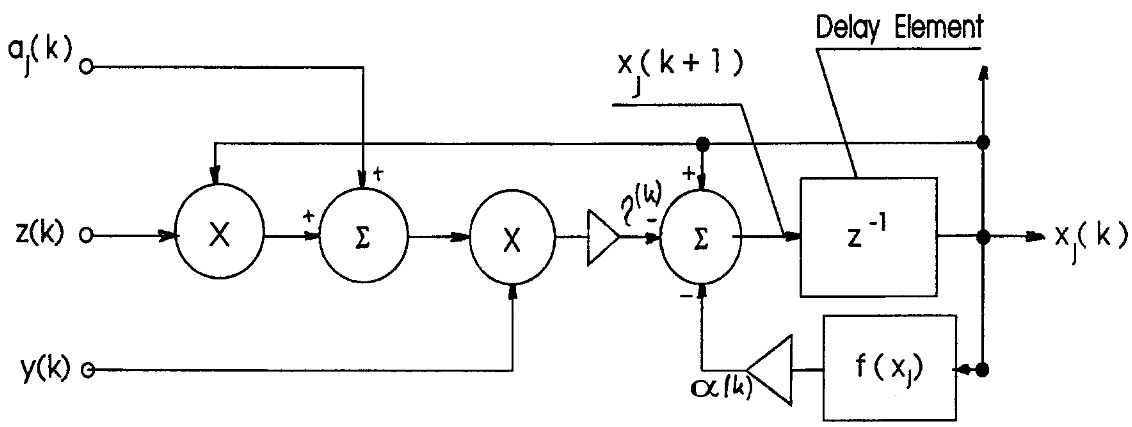


FIG. 5B

European Patent Office

# EUROPEAN SEARCH REPORT

Application Number

EP 93 10 5888
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | IEEE TRANSACTIONS ON CIRCUITS AND SYSTEMS II: ANALOG AND DIGITAL SIGNAL PROCESSING vol. 39, no. 9, September 1992, pages 619 - 633 A. CICHOCKI AND R. UNBEHAUEN 'Neural networks for solving systems of linear equations - Part II: minimax and least absolute value problems' * the whole document * --- | 1-13 | G06F15/80 |
| X | IEEE TRANSACTIONS ON CIRCUITS AND SYSTEMS I: FUNDAMENTAL THEORY AND APPLICATIONS vol. 39, no. 2, February 1992, pages 124 - 138 A. CICHOCKI AND R. UNBEHAUEN 'Neural networks for solving systems of linear equations and related problems' * the whole document * --- | 1-13 | |
| X | ELECTRONICS LETTERS vol. 27, no. 22, 24 October 1991, ENAGE GB pages 2026 - 2028 A. CICHOCKI AND R. UNBEHAUEN 'Winner -take -all neural network and its application to minimax optimisation problems' * page 2027, left column, line 47 - page 2027, right column, line 22; figure 1 * * page 2028, left column, line 1 - page 2028, right column, line 2 * --- | 1,3,5,6, 12 | TECHNICAL FIELDS SEARCHED (Int. Cl.5) G06F |
| X | INTERNATIONAL JOURNAL OF CIRCUIT THEORY AND APPLICATIONS vol. 19, no. 2, March 1991, pages 161 - 187 A. CICHOCKI AND R. UNBEHAUEN 'Switched -capacitor neural networks for differential optimization' * the whole document * --- | 1,2,5,6, 12 | |

The present search report has been drawn up for all claims

| Place of search | Date of completion of the search | Examiner |
|---|---|---|
| THE HAGUE | 23 JUNE 1993 | MICHEL T.G.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

# EUROPEAN SEARCH REPORT

Application Number

EP 93 10 5888
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | 1990 INTERNATIONAL SYMPOSIUM ON CIRCUITS AND SYSTEMS<br>vol. 4, 1 May 1990, NEW ORLEANS, LA, USA, pages 2809 - 2812<br>A. CICHOCKI AND R. UNBEHAUEN 'Switched - capacitor artificial neural networks for nonlinear optimization with constraints'<br>* page 2809, left column, line 1 - line 28 *<br>* page 2810, left column, line 1 - line 14 *<br>--- | 1,5,7,8,12 | |
| A | NEURAL NETWORKS<br>vol. 6, no. 1, 1993, OXFORD GB<br>pages 99 - 113<br>S. SIN AND R. DEFIGUEIREDO 'Efficient learning procedures for optimal interpolative nets'<br>* page 101, left column, line 10 - line 23 *<br>----- | 1,5 | |
| | | | TECHNICAL FIELDS SEARCHED (Int. Cl.5 ) |

The present search report has been drawn up for all claims

| Place of search | Date of completion of the search | Examiner |
|---|---|---|
| THE HAGUE | 23 JUNE 1993 | MICHEL T.G.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document